(19) Europäisches Patentamt
European Patent Office
Office européen des brevets

(11) **EP 2 664 099 B1**

(12) **EUROPEAN PATENT SPECIFICATION**

(45) Date of publication and mention
of the grant of the patent:
**03.06.2020 Bulletin 2020/23**

(51) Int Cl.:
*H04L 9/32* (2006.01)          *H04L 9/30* (2006.01)
*H04L 29/06* (2006.01)

(21) Application number: **12734483.6**

(86) International application number:
**PCT/IB2012/000061**

(22) Date of filing: **03.01.2012**

(87) International publication number:
**WO 2012/095741 (19.07.2012 Gazette 2012/29)**

(54) **METHODS AND APPARATUSES FOR DISTRIBUTING KEYS FOR PTP PROTOCOL**

VERFAHREN UND VORRICHTUNGEN ZUR VERTEILUNG VON SCHLÜSSELN FÜR EIN PTP-PROTOKOLL

PROCÉDÉS ET APPAREILS DE DISTRIBUTION DE CLÉS POUR PROTOCOLE PTP

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.01.2011 CN 201110005208**

(43) Date of publication of application:
**20.11.2013 Bulletin 2013/47**

(73) Proprietor: **Alcatel Lucent
91620 Nozay (FR)**

(72) Inventor: **YAO, Yifeng
Shanghai 201206 (CN)**

(74) Representative: **Zinsinger, Norbert
Louis, Pöhlau, Lohrentz
Patentanwälte
Postfach 30 55
90014 Nürnberg (DE)**

(56) References cited:
**CN-A- 101 118 579          CN-A- 101 729 558
US-A1- 2007 189 249     US-A1- 2009 086 973**

• **"IEEE Standard for a Precision Clock Synchronization Protocol for Networked Measurement and Control Systems;IEEE Std 1588-2008 (Revision of IEEE Std 1588-2002) ED - Anonymous", IEEE STANDARD; [IEEE STANDARD], IEEE, PISCATAWAY, NJ, USA, 24 July 2008 (2008-07-24), pages c1-269, XP017604130, ISBN: 978-0-7381-5400-8**
• **HU LIANG ET AL.: 'The Key Management Mechanism of IBE System.' CHINESE JOURNAL OF COMPUTERS. vol. 32, no. 3, March 2009, pages 543 - 548, XP055124046**

**Description**

FIELD OF THE INVENTION

The present invention relates to the PTP protocol, and in particular, to encryption in the PTP protocol.

DESCRIPTION OF THE RELATED ART

In a distributed system, clock synchronization is an essential technology for many applications. One of the most representative clock synchronization protocols is IEEE 1588 protocol, also referred as PTP protocol (Precision Timing Protocol). A major principle of the PTP protocol is to periodically perform correction synchronization to the clocks of all nodes in a network through a synchronization signal, such that the distributed system may arrive at a precise synchronization. Although the master-slave clock model-based PTP protocol has advantages of simplicity and ease for implementation, more and more studies show that the PTP protocol is vulnerary to malicious attacks or failure. As a typical example, the PTP protocol cannot deal with a malicious master clock, for example, Byzantine or Babbling idiot, that tampers time.

The PTP protocol provides an experimental security extension in Annex K, i.e., offering a "native" security support for clock synchronization in open environments where attackers can get direct access. It uses symmetric message authentication code functions to provide group source authentication, message integrity, and replay protection. The participants in the protocol share symmetric keys that can be shared within a whole domain or within subsets of the domain. Currently, the distribution of symmetric keys are manually configured, thus the flexibility is rather poor. The number of keys that need to be configured in each network node is directly proportional to the number of nodes in the domain and the send/receive relationship among these nodes. It is not so easy for a network administrator to configure/ refresh such huge number of keys. With the current solution, static keys are stored in each network node, which has a drawback of poor confidentiality. From the perspective of security, dynamic keys are better than static keys.

The security extension in Annex K of the PTP protocol does not support tracking. The Annex K uses symmetric message authentication code functions, i.e., any arbitrary node knows the encryption key of its communication peer, such that a malicious node can send out a PTP message in the name of the peer node without being tracked. It would be even worse if the malicious node sends a multicast or broadcast PTP message.

The key distribution may be either manually configured or done through an automatic key management protocol. The Annex K in the PTP protocol supports manual configuration of keys and automatic generation of keys based on a configuration password in accordance with the specification of Annex K. Native security support provides possibility for other future message authentication.

Additionally, the Annex K in the PTP protocol merely supports the fixed challenge-response authentication method, not supporting other authentication method. Thus, its flexibility is rather poor. The patent publication US 2009/0086973 A1 discloses authenticating a wireless node requesting to join a network, wherein the authentication server node securely provides a group encryption key to the wireless node.

SUMMARY OF THE INVENTION

The invention is defined by the independent claims. Preferred embodiments are set out in the dependent claims. In the PTP protocol, the key distribution may be either manually configured or done through an automatic key management protocol. The Annex K in the PTP protocol supports manual configuration of keys and automatic generation of keys based on a configuration password. The present invention provides a technical solution of automatically distributing PTP keys, and on that basis, provides a new encryption method.

According to an embodiment of the present invention, there is provided a method for use in a domain control device of a communication network for distributing a key for the PTP protocol to a network node within a domain, comprising steps of: verifying whether the network node is an eligible node in the domain; sending a key for the PTP protocol to the network node if the network node is an eligible node in the domain.

According to another embodiment of the present invention, there is provided a method for use in a network node of a communication network for encrypting the PTP protocol data packet, comprising steps of: receiving a key for the PTP protocol from a domain control device within a domain to which the network node belongs; performing encrypted communication following the PTP protocol with another network node in the domain with the key.

According to a further embodiment of the present invention, there is provided an apparatus for use in a domain control device of a communication network for distributing the PTP protocol key to a network node within a domain, comprising: first verifying means configured to verify whether the network node is an eligible node in the domain; first sending means configured to send a key for the PTP protocol to the network node if the network node is an eligible node in the domain.

According to yet another embodiment of the present invention, there is provided an apparatus for use in a network node of a communication network for encrypting the PTP protocol data packet, comprising: first receiving means configured to receive a key for the PTP protocol from a domain control device in a domain to which the network node belongs; encrypted communication means configured to perform encrypted communication following the PTP protocol with other network node in the domain utilizing the key.

The methods and apparatuses according to the present invention enable access authentication of various forms of PTP network nodes, and automatic configuration and dynamic sending of PTP keys, such that the security of the keys are greatly enhanced. Additionally, by adopting a SignCryption encryption algorithm, it is enabled that for each PTP message, not only message source authentication, message integrity authentication, message confidentiality, and replay protection can be provided, but also its sending network node can be tracked. Thus, the security is significantly enhanced.

BRIEF DESCRIPTION OF THE DRAWINGS

Through the following detailed depiction on the non-limiting embodiments with reference to the accompanying drawings, the other features, objectives, and advantages of the present invention will become more apparent.

Fig. 1 is a diagram of an application scenario according to an embodiment of the present invention;

Fig. 2 is a flow chart of a method of distributing a key for the PTP protocol to a network node within a domain in a domain control device of a communication network according to an embodiment of the present invention;

Fig. 3 is a flow chart of a sub-step of step S201 in Fig. 2 according to an embodiment of the present invention;

Fig. 4 is a flow chart of a method based on RADIUS authentication;

Fig. 5 is a diagram of protocol architecture of EAP running on the PTP;

Fig. 6 is a diagram of a format of an EAP message for authenticating network node 21 by employing an EAP authentication method;

Fig. 7 is a diagram of a format of an EAP message for authenticating network node 21 by employing a new EAP authentication method;

Fig. 8 is a flow chart of a method of encrypting the PTP protocol data packet within a network node of a communication network according to an embodiment of the present invention;

Fig. 9 is a structural diagram of an apparatus 900 for distributing a key for the PTP protocol to a network node within a domain in a domain control device of a communication network according to an embodiment of the present invention; and

Fig. 10 is a structural diagram of an apparatus 100 of encrypting the PTP protocol data packet within a network node of a communication network according to an embodiment of the present invention.

Throughout the figures, same or similar reference numerals indicate same or corresponding step features or means (modules).

DETAILED DESCRIPTION OF THE INVENTION

Hereinafter, the embodiments of the present invention will be described in detail with reference to the accompanying drawings.

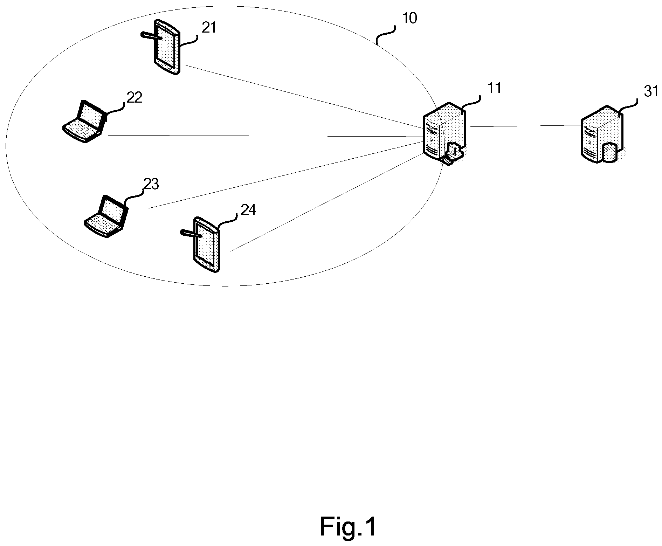

Fig. 1 is a diagram of an application scenario according to an embodiment of the present invention. Fig. 1 illustrates a domain 10 and a plurality of network nodes 21, 22, 23, etc., in the domain. There is a domain control device serving as an automatic distribution device for the PTP protocol key. A domain is generally an application scope in a network. An entity within this scope has an allowed access rights, while an entity beyond this scope will be subjected to the control of domain rights and cannot access. Domain is a relatively strict management mode. Usually, domain and domain control device are employed to perform central management and security control, which is very essential to network security.

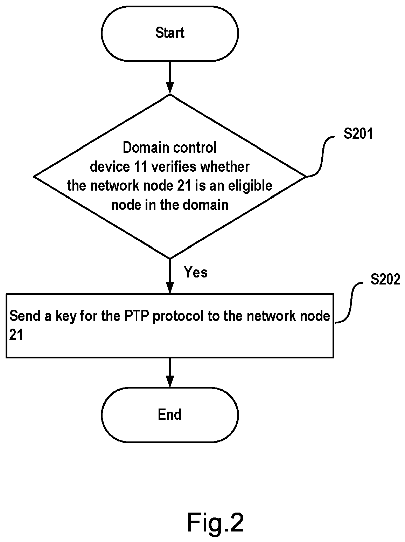

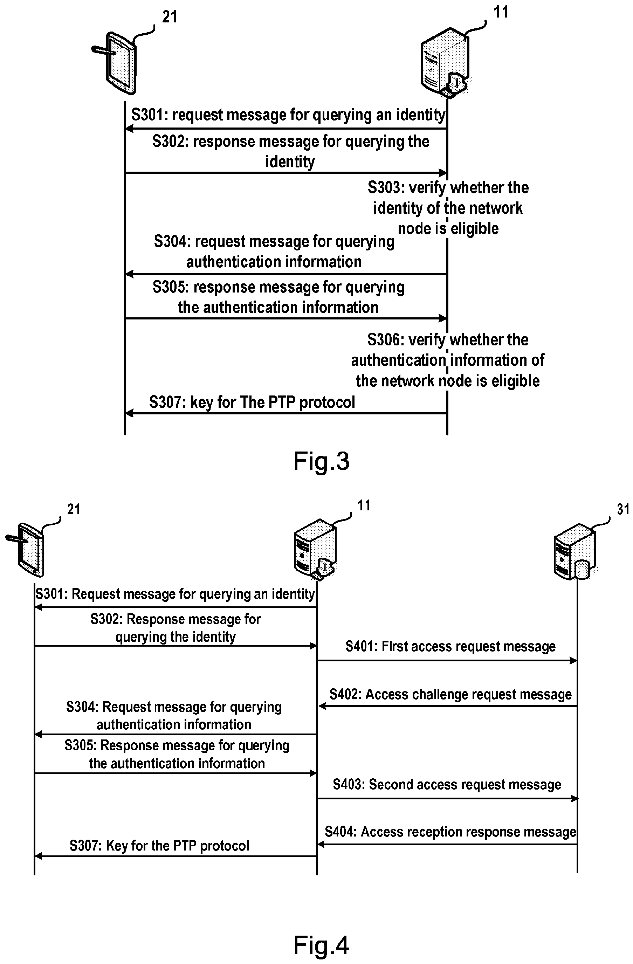

Fig. 2 is a flow chart of a method of distributing a key for the PTP protocol to a network node within a domain in a domain control device of a communication network according to an embodiment of the present invention. Fig. 3 is a flow chart of a sub-step of step S201 in Fig. 2 according to an embodiment of the present invention.

Hereinafter, a process of distributing the PTP protocol key for a domain control device in Fig. 1 will be described in detail.

With reference to Fig. 2, initially at step S201, a domain control device 11 verifies whether a network node 21 is an eligible node in the domain.

If the network node 21 is the eligible node in the domain, then at step S202, a key for the PTP protocol is sent to the network node 21.

Specifically, there are numbers of manners for the domain control device to verify whether the network node 21 is an eligible node in the domain. One embodiment is shown in Fig. 3.

Initially, at step S301, the domain control device 11 sends to the network node 21 a request message for querying an identity.

Next, at step S302, the domain control device 11 receives from the network node 21 a response message for querying the identity, the response message comprising identity information of the network node 21.

At step S303, the domain control device 11 verifies whether the identity of the network node 21 is eligible.

At step 304, if the identity of the network node 21 is eligible, then a request message for querying authentication information is sent to the network node 21.

At step S305, the domain control device 11 receives from the network node 21 a response message for querying the authentication information.

At step S306, the domain control device 11 verifies whether the authentication information of the network node 21 is eligible.

If the authentication information of the network node 21 is eligible, then at step S307, the domain control device 11 sends the key for the PTP protocol to the network node 21.

There are numbers of manners for the domain control device 11 to verify whether the identity of the network node 21 is eligible and to verify whether the authentication information of the network node 21 is eligible. For example, RADIUS-based authentication (RFC2869) or DIAMETER-based authentication (RFC3588) may be used. Fig. 4 is a flow chart of a method of RADIUS-based authentication, wherein steps S301, S302, S304, S305, and S307 are the same as above mentioned, which will not be detailed here. After step S302, the domain control device 11 performs step S401 to send a first access query request message to a remote server 31, wherein the first access query request message comprises identity information of the network node 21. After receiving the first access query request message, the remote server 31 queries stored identity information of the network node, to determine whether the identify information of the network node exists; if so, then it is deemed that the identity of the network node 21 is eligible; then, at step S402, an access challenge request message is sent to the domain control device 21, the access challenge request message being used for requesting for the authentication information of the network node 21.

After receiving the access challenge request message, the domain control device 11 performs steps S304 and S305, and then at step S403, a second access query request message is sent to the remote server 31, the second access query request message comprising authentication information of the network node 21. The remote server 31 verifies whether the authentication information from the network node 21 is eligible; if so, then at step S404, an access reception response message is sent to the domain control device 11. Hereafter, the domain control device 11 performs step S307.

An example of access challenge request and authentication information is Challenge (RN), wherein RN is a random number; Response=H(RN||Key) where Key denotes the pre-configured key for the network node 21, and H may be the hash function specified by the authentication protocol, for example, MD5. The remote server 31 receives the authentication information Response, and compares it with the H(RN||Key) value calculated by itself. If consistent, then the authentication information is eligible. It should be noted that the access challenge request and the authentication information are not limited thereto, and any arbitrary other forms of authentication mechanisms are allowed, for example, One Time Password (OTP), Transport Layer Security (TLS), etc.

Of course, if the domain control device 1 prestores the identity information and authentication information of the network node 21, then it is unnecessary to perform RADIUS authentication or other authentication as illustrated in Fig. 4.

The processes of the domain control device 11 to authenticate the network node 21 and send a key for the PTP protocol have been described in detail in terms of function. Specifically, in one embodiment, the domain control device 11 may verify whether the network node 21 is an eligible node in the domain 10 by means of EAP authentication. It will be described in detail in the following.

EAP is a well known and commonly used security authentication protocol defined in RFC3748. It may run on various kinds of lower transport protocols. Because the present invention is directed to the PTP protocol, it is preferable to use the EAP that runs on the PTP. Of course, the present invention is not limited thereto. Using the EAP running on another protocol may also realize the authentication whether the network node 21 is an eligible node in domain 10. For example, the EAP runs on the UDP or the EAP runs on the Ethernet may be used.

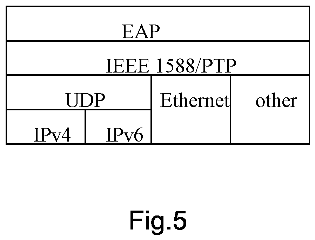

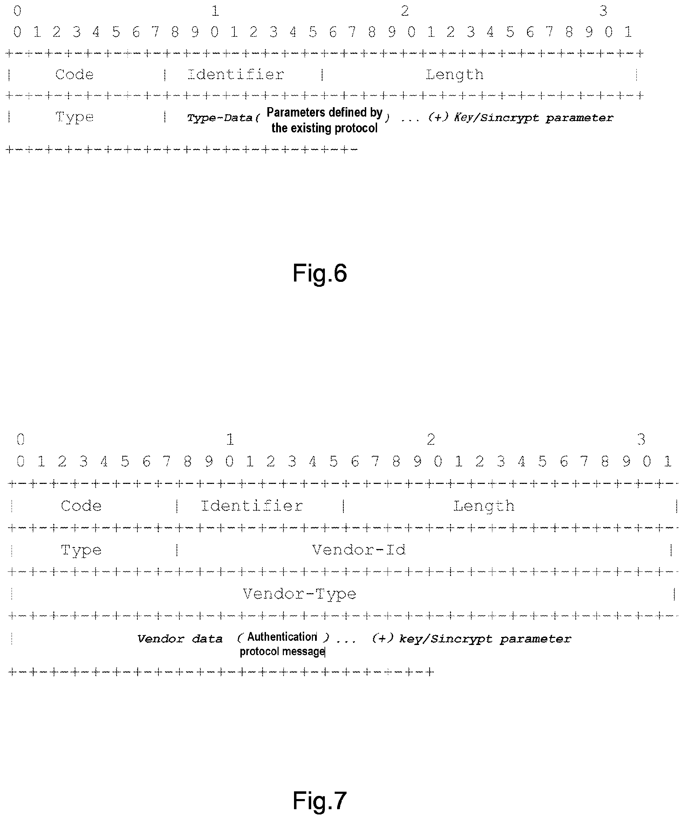

Fig. 5 is a diagram of the protocol architecture of EAP running on the PTP. Fig. 6 is a diagram of a format of an EAP message for authenticating network node 21 by means of an EAP authentication process. In Fig. 6, an existing EAP authentication process is shown to be used. According to the definition of RFC3748, when "Code" is 1, it is an EAP Request message; when "Code" is 2, it is an EAP Response message. "Identifier" is a one-bit-length integer for matching the EAP Request message and the EAP Response message. A new EAP Request message must modify the value of this field. "Length" indicates the length of the whole EAP message. "Type" is a type of EAP Request or EAP Response. The content of Type-data is determined by the type. For example, when the "Type" value = 1, it represents "Identity" for querying the identity of the network node 21; when "Type" value =4, it represents "MD5-Challenge", which is similar to a PPP CHAP protocol and comprises an interrogation message for querying the authentication information of the network node 21. In other words, with reference to Fig. 3, at step S301, "Code" value is 1, and "Type" value is 1. At step S302, "Code" value is 2, "Type" value is 1, and "Type-Data" is the identity information of the network node 21. Since steps S304 and S305 are described with EAP MD5 Challenge authentication manner as an example, "Type" value is 4; at step S304, "Code" value is 1; at step S305, "Code" value is 2, and "Type-Data" is authentication information of the network node 21. Delivery of the key for the PTP protocol in step S307 may be performed by extending the EAP protocol to define a new "Code" and/or a new "Type" and to define a new field in the "Type-Data", or by extending an existing message of the EAP protocol to define a new "Type" and to define a new field in the "Type-Data". Still taking the EAP MD5-Challenge authentication manner as an example to extend a SUCCESS message, a newly defined "Type-Data" is added in the SUCCESS message to transmit the key for the PTP protocol. In this case, the "Code" value is 3, and the type of "Type" may be a new type of extended definition. This type indicates a key field of the PTP protocol in "Type-Data", for transmitting the key for the PTP protocol.

Fig. 6 illustrates a scenario of authenticating the network node 21 by means of an existing EAP authentication process. Fig. 7 illustrates a message format of defining a new EAP authentication according to an embodiment of the present invention. Transmission of the authentication message in steps S301, S302, S304, and S305 and the key for PTP protocol in step S307 are performed utilizing an extended EAP message with "Type" being 254, where the message format is shown in Fig. 7. The message content is transmitted in the "Vendor Data" field, and the key for the PTP protocol may be transmitted by adding one or more fields in the "Vendor Data".

At step S301, "Code" value is 1, "Type" value is 254, and "Vendor-ID" may extend the definition, for example, reserving a particular type value for the IEEE1588 PIP, and distributing a particular "Vendor-ID" for each supported authentication protocol. At step S302, "Code" value is 2, "Type" value is 254, and "Vendor-Data" is the identity information of the network node 21. At step S304, "Code" value is 1, "Type" value is 254. At step S305, "Code" value is 2, "Type" value is 2544, and "Vendor-Data" is the authentication information of the network node 21. The transmission of the key for the PTP protocol at step S307 may be performed by defining a new field in the "Vendor-Data". In this case, "Code" value is 2, "Type" value is 254, and in the "Vendor-Data", the key field of the PTP protocol is added in addition to the field defined by the original authentication protocol, as illustrated in Fig. 6.

It should be noted that the transmission of the key for the PTP protocol in step S202 may be performed in plain text or in encryption. The encryption may be done through the key that has been agreed upon during the authentication stage at step S201. For example, in Fig. 6 or Fig. 7, the network node 21 is authenticated at the domain control device 11 through a TLS protocol. A data encryption key for the TLS may be agreed upon while the authentication is completed. Thus, the data encryption key may be employed to perform encrypting transmission to the key for the PTP protocol.

Based on different encryption manners as employed, there may be multiple forms of keys for the PTP protocol, for example, Hash function encryption manner (IEEE 1588-2008) defined in Annex K of the PTP protocol, and then the keys for the PTP protocol comprise shared symmetrical keys defined in the Annex K of the PTP protocol. For example, encryption and digital signature may be performed by adopting the identity-based SignCryption algorithm (Identity-Based Signcryption, John Malone-Lee, Cryptology ePrint Archive, Report 2002/098, 2002. http://eprint.iacr.org/), then the keys for the PTP protocol comprise parameters and private keys defined in the SignCryption algorithm. Hereinafter, the two algorithms will be described in detail.

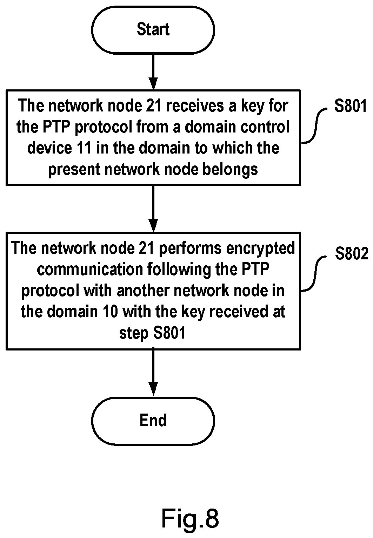

Fig. 8 is a flow chart of a method of encrypting the PTP protocol data packet within a network node of a communication network according to an embodiment of the present invention. Hereinafter, with reference to the application scenario as illustrated in Fig. 1, a method of encrypting the PTP protocol data packet in network node 21 will be described in detail.

Initially, at step S801, the network node 21 receives a key for the PTP protocol from a domain control device 11 in a domain to which the present network node belongs.

Next, at step S802, the network node 21 performs encrypted communication following the PTP protocol with another network node in the domain 10 with the key received at step S801.

As stated above, in one embodiment, the key for the PTP protocol comprises parameters defined in the SignCryption algorithm and a first key, wherein the first key is generated by the domain control device based on the identity information of the network node 21. Specifically, step S802 comprises the following sub-steps: when sending a unicast PTP data packet, generating a digital signature for the unicast PTP data packet based on the first key and the identity information of the receiving node; and encrypting the text body of the unicast PTP data packet; and performing encryption and digital signature authentication for the received unicast PTP data packet based on the first key and the identity information of the sending node.

Hereinafter, with reference to Identity-Based SignCryption by John, it will be described briefly how to generate a digital signature, encryption, decryption, and digital signature authentication in a unicast scenario. Without loss of generality, detailed description will be made with an example of communication between network node 21 and network node 22. Let the identity information of the network node 21 be $ID_a$, and the identity information of the network node 22 be $ID_b$.

P, ê, $H_1$, $H_2$, $H_3$, and $Q_{TA}$ are system confutation parameters defined for the SignCryption algorithm. They are specifically defined as follows: (G, +) and (V, ·) are cyclic groups having a prime order of q. P is a generating element of the cyclic group G. In view of the protocol implementation performance requirements and the protocol datagram overhead, it is recommended to use a cyclic group that is generated by an elliptic curve. ê: GXG→V is a bilinear transformation that satisfies the requirements of identity-based SignCryption algorithm. $H_1$, $H_2$, and $H_3$ are pre-defined hash functions, wherein

$H_1:\{0,1\}^*\to G^*$, $H_2:\{0,1\}^*\to Z_q^*$, $H_3: Z_q^*\to\{0,1\}^n$,

where n denotes the length of the message processed by the SignCryption algorithm, and $G^*=G\backslash\{0\}$.

In the following depiction, the symbol $\|$ denotes bit string connection, $\oplus$ denotes that the bit string is XOR by bit, + denotes an add operation defined on the selected cyclic group, and $t\xleftarrow{\;r\;}Z_q^*$ denotes randomly selecting a value from $Z_q^*$ and imparting the value to t.

Upon the initialization of the system, the domain control device first selects system parameters P, ê, $H_1$, $H_2$, and $H_3$ of the identity-based SignCryption algorithm. Then, $t\xleftarrow{\;r\;}Z_q^*$ is randomly selected and $Q_{TA}$ is calculated as tP, till the system configuration parameters of the SignCryption algorithm of the whole domain are completely determined. The domain control device may disclose P, ê, $H_1$, $H_2$, $H_3$, and $Q_{TA}$, namely notifying respective network nodes in the domain 10 of these parameters. As a random number only known by the domain control device 11, t is the master key of the whole domain.

For the network node 21, when it is added into the domain 10, it needs to be registered with the domain control device 11. The domain control device 11 verifies the network node 21. Only if the network node 21 is successfully authenticated, the domain control device 11 allows the network node 21 to be added into the domain 10. The domain control device 11 obtains the identity ID of the network node 21 during the authentication process. After the network node 21 is successfully authenticated, a private key $S_{ID} = TQ_{ID}$ is calculated for the network node 21 based on its ID, wherein $Q_{ID}=H_1(ID)$. The private key is distributed to the network node 21 with the system configuration parameters P, ê, $H_1$, $H_2$, $H_3$, and $Q_{TA}$. In order to guarantee security, these parameters may be encrypted and protected as required during the distribution process. After the network node 21 completes registration and obtains the system configuration parameters of the SignCryption as well as its private key, it may communicate securely with other nodes in the domain by utilizing the SignCryption algorithm.

When sending a message, the network node 21 processes the message in accordance with the following provisions:

Signcrypt($S_{Ida}$, $ID_b$, m)
$Q_{IDb} = H_1(ID_b)$
$x\xleftarrow{\;r\;}Z_q^*$
U = xP
$r = H_2(U\|m)$
$W = xQ_{TA}$
$V = rS_{IDa} + W$
$y = ê(W, Q_{IDb})$
$k = H_3(y)$
$c = k\oplus m$

$\sigma = (c, U, V)$

wherein m is the PTP protocol message to be sent by the network node 21 to the network node 22, c is the encrypted message, U and V are digital signatures generated based on m, and $\sigma$ is the PTP protocol message encrypted and attached with a digital signature.

After receiving the message with encrypted signature, the network node 22 performs decryption and digital signature authentication for the received unicast PTP data packet based on its private key and the identity information of the sending node (i.e., network node 21) with the following process:

Unsigncrypt($ID_a$, $S_{IDb}$, $\sigma$)
$Q_{IDa} = H_1(ID_a)$
Parse $\sigma$ as (c, U, V)
$y = ê(S_{IDb}, U)$
k=y
$m = k\square c$
$r = H_2(U\|m)$
If $ê(V,P) \neq ê(Q_{IDa}, Q_{TA})^r\cdot ê(U, Q_{TA})$
Return $\perp$ (indicating that the message is invalid and should be discarded)
Return m

If ê(V, P) is not equal to $ê(Q_{IDa}, Q_{TA})^r\cdot ê(U, Q_{TA})$, then the network node 22 determines that this signature is not correct, and then discards or neglects the message m.

Of course, the process of how the network node 21 performs decryption and digital signature verification on the received unicast message is similar to the above mentioned.

For transmission and reception of multicast or broadcast data packets, the domain control device 11 defines identity information for each multicast (or broadcast), generates a second private key based on the identity, and sends the second private key to the network node that requests for receiving the multicast (or broadcast) data packet, for example, network node 21. When sending a multicast or broadcast PTP data packet, the network node 21 generates a digital signature to the multicast or broadcast PTP data packet based on its own first private key, identity information of its multicast group or broadcast group, and encrypts the text body of the multicast or broadcast PTP data packet; and performs decryption and digital signature authentication for the received multicast or broadcast PTP data packet based on the second private key of the multicast (or broadcast) group and the identity information of the sending node.

As mentioned above, in one embodiment, a key for the PTP protocol comprises shared symmetrical keys defined by Annex K of the PTP protocol. Specifically, the number of shared symmetrical keys depends on the number of network nodes with which the network node 21 needs to communicate. Specifically, step S802 comprises the following sub-steps: the network node 21 performs security protection for the PTP data packet utilizing the encryption key according to Annex K of the PTP protocol; and performs security verification for the PTP data packet utilizing the encryption key according to the Annex K of the PTP protocol.

Hereinafter, it will be described in detail, with reference to the Annex K of the PTP protocol, how the network node 21 performs security protection and verification for the transmitted and received data packets with the shared symmetrical keys.

When the PTP protocol supports the Annex K, all PTP messages must carry the field AUTHENTICATION TLV, and sets the security flag for the flag filed (flagField.Secure). The "Integrity Check Value" field in the AUTHENTICATION TLV is for guaranteeing the integrity of the whole message. The ICV is the obtained by applying the message authentication code function (for example, HMAC-SHA1-96 or HMAC-SHA256-128 functions defined in the Annex K of the PTP protocol) identified by the algorithm ID in the AUTHENTICATION TLV and the key identified by key ID to the whole PTP message.

Without loss of generality, taking the communication between the network node 21 and the network node 22 as an example, their shared symmetrical key is K, and m is the PTP protocol data packet to be transmitted by the network node 21 to the network node 22. The network node 21 fills in relevant fields in the AUTHENTICATION TLV as required, for example, algorithm ID, key ID, etc., wherein ICV value is zero, and the initial AUTHENTICATION TLV is attached to the message m. The network node 21 calculates the integrity check value field =H (attached with the PTP message of the initial AUTHENTICATION TLV, K) based on the algorithm ID in the AUTHENTICATION TLV, key ID, and the PTP message attached with the initial AUTHENTICATION TLV, wherein H is the HMAC-SHA1-96 or HMAC-SHA256-128 function defined in Annex K of the PTP protocol. The network node 21 uses this result to modify the ICV field in the initial AUTHENTICATION TLV and sends the message with the ICV-modified AUTHENTICATION TLV field to the network node 22. After receiving the message m carrying the AUTHENTICATION TLV, the network node 22 calculates, using the same method as above mentioned, the algorithm ID in the AUTHENTICATION TLV, the key ID, and the received m, and compares it with the ICV value carried in the AUTHENTICATION TLV in the received message; if they are not consistent, then discards or neglects the message m. The network node 21 also performs such check to the PTP protocol message received from the network node 22.

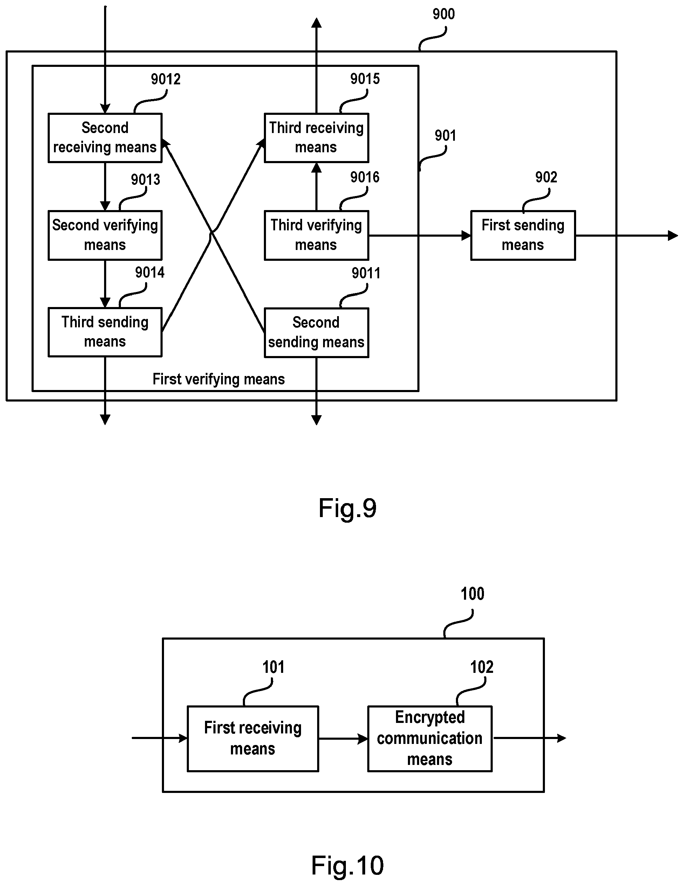

Fig. 9 is a structural diagram of an apparatus 900 for distributing a key for the PTP protocol to a network node within a domain in a domain control device of a communication network according to an embodiment of the present invention, wherein the apparatus 900 comprises first verifying means 901 and first sending means 902. In one embodiment, the first verifying means 901 comprises second sending means 9011, second receiving means 9012, second verifying means 9013, third sending means 9014, third receiving means 9015, and third verifying means 9016.

Hereinafter, detailed description will be made with respect to the working procedure of the apparatus 900 in the domain control device 11.

Initially, the first verifying means 901 verifies whether the network node 21 is an eligible node in the domain.

If the network node is an eligible node in the domain, then the first sending means 902 sends to the network node a key for the PTP protocol.

Specifically, there are numbers of manners for the first verifying means 901 to verify whether the network node 21 is an eligible node in the domain. One embodiment will be illustrated below.

Initially, the second sending means 9011 sends to the network node 21 a request message for querying an identity.

Next, the second receiving means 9012 receives a response message for querying the identity from the network node 21, the response message comprising identity information of the network node 21.

The second verifying means 9013 verifies whether the identity of the network node 21 is eligible.

If the identity of the network node 21 is eligible, then the third sending means 9014 sends to the network node 21 a request message for querying authentication information.

The third receiving means 9015 receives a response message for querying the authentication information from the network node 21.

The third verifying means 9016 verifies whether the authentication information of the network node 21 is eligible.

If the authentication information of the network node 21 is eligible, then the first sending means 902 sends the key for the PTP protocol to the network node 21.

There are a plurality of manners for the second verifying means 9013 to verify whether the identity of the network node 21 is eligible and for the third verifying means 9016 to verify whether the authentication information of the network node 21 is eligible, for example, RADIUS-based authentication (RFC2869) or DIAMETER-based authentication (RFC3588).

In one embodiment, the first verifying means 901 may verify whether the network node 21 is an eligible node in the domain 10 by means of EAP authentication. The first sending means 902 implements sending the key for the PTP protocol through extending the definition "Type-Data" in the message that is defined in the EAP authentication process. In another embodiment, the first sending means 902 implements sending the key for the PTP protocol by defining "Expanded Type" in the EAP message to thereby define a new EAP authentication manner. The key for the PTP protocol may be sent in a form of encrypted text or in a form of plain text. In one embodiment, the key for the PTP protocol comprises shared symmetrical keys defined in Annex K of the PTP protocol. In another embodiment, the key for the PTP protocol comprises parameters and private keys that are defined in the SignCryption algorithm.

Fig. 10 is a structural block diagram of an apparatus 100 for encrypting PTP protocol data packets in a network node of a communication network according to one embodiment of the present invention. Hereinafter, the process of encrypting the PTP protocol data packets for the apparatus 100 in the network node 21 will be described in detail.

Initially, the first receiving means 101 receives a key for the PTP protocol from a domain control device 11 in a domain to which the present network node belongs.

Next, the encrypted communication means 102 performs the encrypted communication following the PTP protocol with another network node in the domain utilizing the key.

As stated above, in one embodiment, the key for the PTP protocol comprises parameters defined in the SignCryption algorithm and a first key, wherein the first key is generated by the domain control device 10 based on the identity information of the network node 21. Specifically, the encrypted communication means 102 performs the following functions: when sending a unicast PTP data packet, generating a digital signature to the unicast PTP data packet based on the first key and the identity information of the receiving node, and encrypting the text body of the unicast PTP data packet; and performing encryption and digital signature authentication for the received unicast PTP data packet based on the first key and the identity information of the sending node.

For transmission and reception of multicast or broadcast data packets, the domain control device 11 defines identity information for each multicast (or broadcast), generates a second private key based on the identity, and sends the second private key to the network node that requests for receiving the multicast (or broadcast) data packet, for example, network node 21. When the network node 21 sends a multicast or broadcast PTP data packet, the encrypted communication means 102 generates a digital signature to the multicast or broadcast PTP data packet based on its own first private key, identity information of its multicast group or broadcast group, and encrypts the text body of the multicast or broadcast PTP data packet; and performs decryption and digital signature authentication for the received multicast or broadcast PTP data packet based on the second private key of the multicast (or broadcast) group and the identity information of the sending node.

As stated above, in one embodiment, the key for the PTP protocol comprises shared symmetrical keys defined in Annex K of the PTP protocol. Specifically, the number of shared symmetrical keys depends on the number of network nodes with which the network node 21 needs to communicate. Specifically, the encrypted communication means 102 performs the following functions: the network node 21 performs security protection for the PTP data packet utilizing the encryption key according to Annex K of the PTP protocol; and performs security verification for the PTP data packet utilizing the encryption key according to the Annex K of the PTP protocol.

Any arbitrary technical solution that does not deviate from the scope of the invention as defined by the claims should fall into the protection scope of the present invention. Additionally, any reference numerals in the claims should not be regarded as limiting the claims; the term "comprise" does not exclude other means or steps that are not specified in the claims or description; "a" before a means does not exclude existence of more like means; in an apparatus that comprise a plurality of means, one or more functions of the plurality of means may be implemented by a same hardware or software module; phrases such as "first," "second," and "third" merely denote the names, without indicating any particular sequence.

The specific embodiments of the present invention have been described above. It should be noted that the present invention is not limited to the above particular embodiment. Those skilled in the art may make various alterations or amendments within the scope of appended claims.

## Claims

1. A method for use in a domain control device (11) of a communication network for distributing a key for the Precision Timing Protocol, PTP, protocol to a network node (21) within a domain (10), comprising steps of:

   verifying, with an authentication server, whether the network node (21) is an eligible node in the domain (10) in an EAP authentication manner, and
   sending the key for the PTP protocol to the network node (21) if the network node (21) is an eligible node in the domain (10),
   **wherein** the step of sending the key for the PTP protocol to the network node (21) comprises a step of:
   implementing the sending of the key for the PTP protocol by using an extended definition of the field "Type-Data" in a message that is defined in an EAP authentication.

2. The method according to claim 1, wherein the step of verifying comprises steps of:

   sending to the network node (21) a request message for querying an identity;

receiving from the network node (21) a response message for querying the identity, the response message comprising information of identity of the network node (21);

verifying whether the identity of the network node (21) is eligible;

sending to the network node (21) a request message for querying an authentication information;

receiving from the network node (21) a response message for querying the authentication information;

verifying whether the authentication information is eligible; and

sending the key for the PTP protocol to the network node (21) if the authentication information is eligible.

3. The method according to Claim 2, wherein the identity of the network node (21) and the authentication information are verified based on RADIUS authentication or DIAMETER authentication.

4. The method according to claim 1, wherein the sending of the key for the PTP protocol is implemented by defining an "Expanded Type" in an EAP message to define a new EAP authentication manner.

5. The method according to claim 1, wherein the PTP protocol key is sent in a form of encrypted text.

6. The method according to claim 1, wherein the key for the PTP protocol comprises a shared symmetrical key defined in Annex K of the PTP protocol according to IEEE 1588-2008.

7. The method according to claim 1, wherein the key for the PTP protocol comprises a parameter and a private key defined in a SignCryption algorithm.

8. A method for use in a network node (21) of a communication network for encrypting a Precision Timing Protocol, PTP, protocol data packet, comprising steps of:

A. receiving a key for the PTP protocol from a domain control device (11) in a domain to which the network node belongs after being verified by the domain control device (11) that the network node (21) is an eligible node in the domain in an EAP authentication manner; and

B. performing an encrypted communication following the PTP protocol with another network node (22) in the domain (10) with the key,

**wherein** the step of receiving the key for the PTP protocol comprises receiving the key by using an extended definition of the field "Type-Data" in a message that is defined in an EAP authentication.

9. The method according to claim 8, wherein the key for the PTP protocol comprises a parameter and a first private key defined in a SignCryption algorithm, wherein the first private key is generated by the domain control device (11) based on identity information of the network node (21), the step B comprising steps of:

when sending a unicast PTP data packet, generating a digital signature for the unicast PTP data packet based on the first private key and the identity information of a receiving node, and encrypting a text body of the unicast PTP data packet; and

performing decryption and digital signature verification for a received unicast PTP data packet based on the first private key and the identity information of a sending node.

10. The method according to claim 9, wherein the network node (21) further sends and receives multicast or broadcast PTP data packets, and wherein the key for the PTP protocol further comprises identity information for a multicast group or broadcast group defined in the SignCryption algorithm and a second private key generated based on the identity information,

the step B further comprising steps of:

when sending a multicast or broadcast PTP data packet, generating a digital signature for the multicast or broadcast PTP data packet based on the first private key and the identity information of the multicast group or broadcast group, and encrypting a text body of the multicast or broadcast PTP data packet; and

performing decryption and digital signature verification for a received multicast or broadcast PTP data packet based on the second private key and the identity information of a sending node.

11. The method according to claim 8, wherein the key for the PTP protocol comprises a shared symmetrical key defined in Annex K of the PTP protocol according to IEEE 1588-2008, the step B comprising steps of:

performing a security protection for the PTP data packet with the encryption key according to Annex K of the PTP protocol; and

performing a security verification for the PTP data packet with the encryption key according to Annex K of the PTP protocol.

12. An apparatus (900) for use in a domain control device (11) of a communication network for distributing a key for the Precision Timing Protocol, PTP, protocol to a network node (21) within a domain (10), comprising:

first verifying means configured to verify, with an authentication server, whether the network node is an eligible node in the domain in an EAP authentication manner;

first sending means configured to send the key for the PTP protocol to the network node (21) if the network node (21) is an eligible node in the domain (10),

**wherein** in sending the key for the PTP protocol the first sending means are configured to use an extended definition of the field "Type-Data" in a message that is defined in an EAP authentication.

13. An apparatus (100, 900) for encrypting the Precision Timing Protocol, PTP, protocol data packet in a network node (21) of a communication network, comprising:

first receiving means configured to receive a key for the PTP protocol from a domain control device (11) in a domain to which the network node (21) belongs after being verified by the domain control device (11) that the network node (21) is an eligible node in the domain in an EAP authentication manner;

encrypted communication means configured to perform an encrypted communication following the PTP protocol with another network node (22) in the domain (10) with the key,

wherein in receiving the key for the PTP protocol the first receiving means are configured to receive the key by using an extended definition of the field "Type-Data" in a message that is defined in an EAP authentication.

**Patentansprüche**

1. Verfahren zur Verwendung in einer Domänensteuervorrichtung (11) eines Kommunikationsnetzwerks zum Verteilen eines Schlüssels für das Precision Timing Protocol- (PTP) Protokoll an einen Netzwerkknoten (21) innerhalb einer Domäne (10), das Schritte umfasst zum:

Überprüfen mit einem Authentifizierungsserver auf eine EAP-Authentifizierungsweise, ob der Netzwerkknoten (21) ein berechtigter Knoten in der Domäne (10) ist, und

Senden des Schlüssels für das PTP-Protokoll an den Netzwerkknoten (21), wenn der Netzwerkknoten (21) ein berechtigter Knoten in der Domäne (10) ist,

wobei der Schritt des Sendens des Schlüssels für das PTP-Protokoll an den Netzwerkknoten (21) einen Schritt umfasst zum:
Implementieren des Sendens des Schlüssels für das PTP-Protokoll durch Verwendung einer erweiterten Definition des Feldes "Typ-Daten" in einer Nachricht, die in einer EAP-Authentifizierung definiert ist.

2. Verfahren nach Anspruch 1, wobei der Schritt des Überprüfens Schritte umfasst zum:

Senden einer Anforderungsnachricht zum Abfragen einer Identität an den Netzwerkknoten (21);

Empfangen einer Antwortnachricht zum Abfragen der Identität vom Netzwerkknoten (21), wobei die Antwortnachricht Informationen über die Identität des Netzwerkknotens (21) umfasst;

Überprüfen, ob die Identität des Netzwerkknotens (21) berechtigt ist;

Senden einer Anforderungsnachricht zum Abfragen einer Authentifizierungsinformation an den Netzwerkknoten (21); Empfangen einer Antwortnachricht zum Abfragen der Authentifizierungsinformationen vom Netzwerkknoten (21); Überprüfen, ob die Authentifizierungsinformationen berechtigt sind; und

Senden des Schlüssels für das PTP-Protokoll an den Netzwerkknoten (21), wenn die Authentifizierungsinformationen berechtigt sind.

3. Verfahren nach Anspruch 2, wobei die Identität des Netzwerkknotens (21) und die Authentifizierungsinformationen basierend auf RADIUS-Authentifizierung oder DIAMETER-Authentifizierung überprüft werden.

4. Verfahren nach Anspruch 1, wobei das Senden des Schlüssels für das PTP-Protokoll durch Definieren eines "erweiterten Typs" in einer EAP-Nachricht implementiert wird, um eine neue EAP-Authentifizierungsweise zu definieren.

5. Verfahren nach Anspruch 1, wobei der PTP-Protokollschlüssel in Form eines verschlüsselten Textes gesendet wird.

6. Verfahren nach Anspruch 1, wobei der Schlüssel für das PTP-Protokoll einen gemeinsamen symmetrischen Schlüssel umfasst, der in Anhang K des PTP-Protokolls gemäß IEEE 1588-2008 definiert ist.

7. Verfahren nach Anspruch 1, wobei der Schlüssel für das PTP-Protokoll einen Parameter und einen privaten Schlüssel umfasst, die in einem SignCryption-Algorithmus definiert sind.

8. Verfahren zur Verwendung in einem Netzwerkknoten (21) eines Kommunikationsnetzwerks zum Verschlüsseln eines Precision Timing Protocol-, PTP, Protokolldatenpakets, das Schritte umfasst zum:

A. Empfangen eines Schlüssels für das PTP-Protokoll von einer Domänensteuervorrichtung (11) in einer Domäne, zu der der Netzwerkknoten gehört, nachdem durch die Domänensteuervorrichtung (11) auf eine EAP-Authentifizierungsweise überprüft wurde, dass der Netzwerkknoten (21) ein berechtigter Knoten in der Domäne ist; und

B. Durchführen einer verschlüsselten Kommunikation nach dem PTP-Protokoll mit einem anderen Netzwerkknoten (22) in der Domäne (10) mit dem Schlüssel,

wobei der Schritt des Empfangens des Schlüssels für das PTP-Protokoll das Empfangen des Schlüssels unter Verwendung einer erweiterten Definition des Feldes "Typ-Daten" in einer Nachricht umfasst, die in einer EAP-Authentifizierung definiert ist.

9. Verfahren nach Anspruch 8, wobei der Schlüssel für das PTP-Protokoll einen Parameter und einen ersten privaten Schlüssel umfasst, der in einem Sign-Cryption-Algorithmus definiert ist, wobei der erste private Schlüssel durch die Domänensteuervorrichtung (11) basierend auf Identitätsinformationen des Netzwerkknotens (21) erzeugt wird, wobei der Schritt B Schritte umfasst zum:

beim Senden eines Unicast-PTP-Datenpakets, Erzeugen einer digitalen Signatur für das Unicast-PTP-Datenpaket basierend auf dem ersten privaten Schlüssel und den Identitätsinformationen eines empfangenden Knotens, und Verschlüsseln eines Textkörpers des Unicast-PTP-Datenpakets; und

Durchführen der Entschlüsselung und Überprüfung der digitalen Signatur für ein empfangenes Unicast-PTP-Datenpaket basierend auf dem ersten privaten Schlüssel und den Identitätsinformationen eines sendenden Knotens.

10. Verfahren nach Anspruch 9, wobei der Netzwerkknoten (21) ferner Multicast- oder Broadcast-PTP-Datenpakete sendet und empfängt, und wobei der Schlüssel für das PTP-Protokoll ferner Identitätsinformationen für eine Multicast-Gruppe oder Broadcast-Gruppe, die in dem SignCryption-Algorithmus definiert ist, und einen zweiten privaten Schlüssel umfasst, der basierend auf den Identitätsinformationen erzeugt wird, wobei der Schritt B ferner Schritte umfasst zum:

beim Senden eines Multicast- oder Broadcast-PTP-Datenpakets Erzeugen einer digitalen Signatur für das Multicast- oder Broadcast-PTP-Datenpaket basierend auf dem ersten privaten Schlüssel und den Identitätsinformationen der Multicast-Gruppe oder Broadcast-Gruppe und Verschlüsseln eines Textkörpers des Multicast- oder Broadcast-PTP-Datenpakets; und Durchführen der Entschlüsselung und Überprüfung der digitalen Signatur für ein empfangenes Multicast- oder Broadcast-PTP-Datenpaket basierend auf dem zweiten privaten Schlüssel und den Identitätsinformationen eines sendenden Knotens.

11. Verfahren nach Anspruch 8, wobei der Schlüssel für das PTP-Protokoll einen gemeinsamen symmetrischen Schlüssel umfasst, der in Anhang K des PTP-Protokolls gemäß IEEE 1588-2008 definiert ist, wobei der Schritt B Schritte umfasst zum:

Durchführen eines Sicherheitsschutzes für das PTP-Datenpaket mit dem Verschlüsselungsschlüssel gemäß Anhang K des PTP-Protokolls; und

Durchführen einer Sicherheitsüberprüfung für das PTP-Datenpaket mit dem Verschlüsselungsschlüssel gemäß Anhang K des PTP-Protokolls.

12. Vorrichtung (900) zur Verwendung in einer Domänensteuervorrichtung (11) eines Kommunikationsnetzwerks zum Verteilen eines Schlüssels für das Precision Timing Protocol- PTP, Protokoll an einen Netzwerkknoten (21) innerhalb einer Domäne (10), umfassend:

ein erstes Überprüfungsmittel, das dazu eingerichtet ist, mit einem Authentifizierungsserver auf eine EAP-Authentifizierungsweise zu überprüfen, ob der Netzwerkknoten ein berechtigter Knoten in der Domäne ist; ein erstes Sendemittel, das dazu eingerichtet ist, den Schlüssel für das PTP-Protokoll an den Netzwerkknoten (21) zu senden, wenn der Netzwerkknoten (21) ein berechtigter Knoten in der Domäne (10) ist, wobei beim Senden des Schlüssels für das PTP-Protokoll das erste Sendemittel dazu eingerichtet ist, eine erweiterte Definition des Feldes "Typ-Daten" in einer Nachricht zu verwenden, die in einer EAP-Authentifizierung definiert ist.

13. Vorrichtung (100, 900) zum Verschlüsseln des Precision Timing Protocol-, PTP, Protokolldatenpakets in einem Netzwerkknoten (21) eines Kommunikationsnetzwerks, umfassend:

ein erstes Empfangsmittel, das dazu eingerichtet ist, einen Schlüssel für das PTP-Protokoll aus einer Domänensteuervorrichtung (11) in einer Domäne, zu der der Netzwerkknoten (21) gehört, zu empfangen, nachdem durch die Domänensteuervorrichtung (11) auf eine EAP-Authentifizierungsweise überprüft wurde, dass der Netzwerkknoten (21) ein berechtigter Knoten in der Domäne ist;

ein verschlüsseltes Kommunikationsmittel, das dazu eingerichtet ist, eine verschlüsselte Kommunikation nach dem PTP-Protokoll mit einem anderen Netzwerkknoten (22) in der Domäne (10) mit dem Schlüssel durchzuführen, wobei beim Empfangen des Schlüssels für das PTP-Protokoll das erste Empfangsmittel dazu eingerichtet ist, den Schlüssel durch Verwendung einer erweiterten Definition des Feldes "Typ-Daten" in einer Nachricht, die in einer EAP-Authentifizierung definiert ist, zu empfangen.

## Revendications

1.  Procédé, destiné à être utilisé dans un dispositif de contrôle de domaine (11) d'un réseau de communication, de distribution d'une clé pour le protocole dit Precision Timing Protocol, ou PTP, à un nœud de réseau (21) au sein d'un domaine (10), comprenant des étapes de :

    vérification, à l'aide d'un serveur d'authentification, si le nœud de réseau (21) est un nœud admissible ou non dans le domaine (10) dans un mode d'authentification EAP, et
    envoi de la clé pour le protocole PTP au nœud de réseau (21) si le nœud de réseau (21) est un nœud admissible dans le domaine (10),
    l'étape d'envoi de la clé pour le protocole PTP au nœud de réseau (21) comprenant une étape de :
    mise en œuvre de l'envoi de la clé pour le protocole PTP au moyen d'une définition étendue du champ "Type-Data" dans un message qui est défini dans une authentification EAP.

2.  Procédé selon la revendication 1, dans lequel l'étape de vérification comprend des étapes de :

    envoi, au nœud de réseau (21), d'un message de requête pour la recherche d'une identité ;
    réception, depuis le nœud de réseau (21), d'un message de réponse pour la recherche de l'identité, le message de réponse comprenant des informations d'identité du nœud de réseau (21) ;
    vérification si l'identité du nœud de réseau (21) est admissible ou non ;
    envoi, au nœud de réseau (21), d'un message de requête pour la recherche d'une information d'authentification ;
    réception, depuis le nœud de réseau (21), d'un message de réponse pour la recherche de l'information d'authentification ;
vérification si l'information d'authentification est admissible ou non ; et
envoi de la clé pour le protocole PTP au nœud de réseau (21) si l'information d'authentification est admissible.

3.  Procédé selon la revendication 2, dans lequel l'identité du nœud de réseau (21) et l'information d'authentification sont vérifiées sur la base d'une authentification RADIUS ou d'une authentification DIAMETER.

4.  Procédé selon la revendication 1, dans lequel l'envoi de la clé pour le protocole PTP est mis en œuvre par définition d'un "Expanded Type" dans un message EAP afin de définir un nouveau mode d'authentification EAP.

5.  Procédé selon la revendication 1, dans lequel la clé du protocole PTP est envoyée sous forme de texte chiffré.

6.  Procédé selon la revendication 1, dans lequel la clé pour le protocole PTP comprend une clé symétrique partagée définie dans l'Annexe K du protocole PTP selon IEEE 1588-2008.

7.  Procédé selon la revendication 1, dans lequel la clé pour le protocole PTP comprend un paramètre et une clé privée définie dans un algorithme SignCryption.

8.  Procédé, destiné à être utilisé dans un nœud de réseau (21) d'un réseau de communication, de chiffrement d'un paquet de données du protocole dit Précision Timing Protocol, ou PTP, comprenant des étapes de :

    A. réception d'une clé pour le protocole PTP depuis un dispositif de contrôle de domaine (11) dans un domaine auquel appartient le nœud de réseau suite à la vérification, par le dispositif de contrôle de domaine (11), que le nœud de réseau (21) est un nœud admissible dans le domaine dans un mode d'authentification EAP ; et
    B. réalisation d'une communication chiffrée, suivant le protocole PTP, avec un autre nœud de réseau (22) dans le domaine (10) à l'aide de la clé,

    l'étape de réception de la clé pour le protocole PTP comprenant la réception de la clé au moyen d'une définition étendue du champ "Type-Data" dans un message qui est défini dans une authentification EAP.

**9.** Procédé selon la revendication 8, dans lequel la clé pour le protocole PTP comprend un paramètre et une première clé privée définie dans un algorithme SignCryption, la première clé privée étant générée par le dispositif de contrôle de domaine (11) sur la base d'informations d'identité du nœud de réseau (21), l'étape B comprenant des étapes de :

lors de l'envoi d'un paquet de données PTP en unidiffusion, génération d'une signature numérique pour le paquet de données PTP en unidiffusion sur la base de la première clé privée et des informations d'identité d'un nœud de réception, et chiffrement d'un corps de texte du paquet de données PTP en unidiffusion ; et réalisation d'un déchiffrement et d'une vérification de signature numérique pour un paquet de données PTP en unidiffusion reçu sur la base de la première clé privée et des informations d'identité d'un nœud d'envoi.

**10.** Procédé selon la revendication 9, dans lequel le nœud de réseau (21) envoie et reçoit en outre des paquets de données PTP en multidiffusion ou en diffusion large, et dans lequel la clé pour le protocole PTP comprend en outre des informations d'identité pour un groupe en multidiffusion ou un groupe en diffusion large définies dans l'algorithme SignCryption et une deuxième clé privée générée sur la base des informations d'identité, l'étape B comprenant en outre des étapes de :

lors de l'envoi d'un paquet de données PTP en multidiffusion ou en diffusion large, génération d'une signature numérique pour le paquet de données PTP en multidiffusion ou en diffusion large sur la base de la première clé privée et des informations d'identité du groupe en multidiffusion ou du groupe en diffusion large, et chiffrement d'un corps de texte du paquet de données PTP en multidiffusion ou en diffusion large ; et réalisation d'un déchiffrement et d'une vérification de signature numérique pour un paquet de données PTP en multidiffusion ou en diffusion large reçu sur la base de la deuxième clé privée et des informations d'identité d'un nœud d'envoi.

**11.** Procédé selon la revendication 8, dans lequel la clé pour le protocole PTP comprend une clé symétrique partagée définie dans l'Annexe K du protocole PTP selon IEEE 1588-2008, l'étape B comprenant des étapes de :

réalisation d'une protection de sécurité pour le paquet de données PTP à l'aide de la clé de chiffrement selon l'Annexe K du protocole PTP ;

et réalisation d'une vérification de sécurité pour le paquet de données PTP à l'aide de la clé de chiffrement selon l'Annexe K du protocole PTP.

**12.** Appareil (900), destiné à être utilisé dans un dispositif de contrôle de domaine (11) d'un réseau de communication, de distribution d'une clé pour le protocole dit Précision Timing Protocol, ou PTP, à un nœud de réseau (21) au sein d'un domaine (10), comprenant :

des premiers moyens de vérification configurés pour vérifier, au moyen d'un serveur d'authentification, si le nœud de réseau est un nœud admissible ou non dans le domaine dans un mode d'authentification EAP ; des premiers moyens d'envoi configurés pour envoyer la clé pour le protocole PTP au nœud de réseau (21) si le nœud de réseau (21) est un nœud admissible dans le domaine (10), lors de l'envoi de la clé pour le protocole PTP, les premiers moyens d'envoi étant configurés pour utiliser une définition étendue du champ "Type-Data" dans un message qui est défini dans une authentification EAP.

**13.** Appareil (100, 900) de chiffrement du paquet de données du protocole dit Precision Timing Protocol, ou PTP, dans un nœud de réseau (21) d'un réseau de communication, comprenant :

des premiers moyens de réception configurés pour recevoir une clé pour le protocole PTP depuis un dispositif de contrôle de domaine (11) dans un domaine auquel appartient le nœud de réseau (21) suite à la vérification, par le dispositif de contrôle de domaine (11), que le nœud de réseau (21) est un nœud admissible dans le domaine dans un mode d'authentification EAP ; des moyens de communication chiffrée configurés pour réaliser une communication chiffrée, suivant le protocole PTP, avec un autre nœud de réseau (22) dans le domaine (10) à l'aide de la clé, lors de la réception de la clé pour le protocole PTP, les premiers moyens de réception étant configurés pour recevoir la clé au moyen d'une définition étendue du champ "Type-Data" dans un message qui est défini dans une authentification EAP.

EP 2 664 099 B1

Fig.1

Start

Domain control
device 11 verifies whether
the network node 21 is an eligible
node in the domain

S201

Yes

Send a key for the PTP protocol to the network node
21

S202

End

Fig.2

21                                                                                  11

S301: request message for querying an identity

S302: response message for querying the
identity

S303: verify whether the
identity of the network
node is eligible

S304: request message for querying
authentication information

S305: response message for querying
the authentication information

S306: verify whether the
authentication information of
the network node is eligible

S307: key for The PTP protocol

Fig.3

21                                           11                                           31

S301: Request message for querying an identity

S302: Response message for
querying the identity

S401: First access request message

S402: Access challenge request message

S304: Request message for querying
authentication information

S305: Response message for querying
the authentication information

S403: Second access request message

S404: Access reception response message

S307: Key for the PTP protocol

Fig.4

| EAP | | | |
|---|---|---|---|
| IEEE 1588/PTP | | | |
| UDP | | Ethernet | other |
| IPv4 | IPv6 | | |

Fig.5

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|     Code      |  Identifier   |            Length             |
+-+-+-+-+-+-+-+-+-+-+-+-+-+-+-+-+-+-+-+-+-+-+-+-+-+-+-+-+-+-+-+-+
|     Type      |  Type-Data ( Parameters defined by ) ... (+) Key/Sincrypt parameter
                              the existing protocol
+-+-+-+-+-+-+-+-+-+-+-+-+-+-+-+-+-
```

## Fig.6

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-
|     Code      |  Identifier   |            Length             |
+-+-+-+-+-+-+-+-+-+-+-+-+-+-+-+-+-+-+-+-+-+-+-+-+-+-+-+-+-+-+-+-
|     Type      |              Vendor-Id                        |
+-+-+-+-+-+-+-+-+-+-+-+-+-+-+-+-+-+-+-+-+-+-+-+-+-+-+-+-+-+-+-+-
|                      Vendor-Type                             |
+-+-+-+-+-+-+-+-+-+-+-+-+-+-+-+-+-+-+-+-+-+-+-+-+-+-+-+-+-+-+-+-
|          Vendor data  ( Authentication ) ... (+) key/Sincrypt parameter
                         protocol message
+-+-+-+-+-+-+-+-+-+-+-+-+-+-+-+-+-+-+-+
```

## Fig.7

```
           ┌─────────────┐
           │    Start    │
           └──────┬──────┘
                  │
                  ▼
  ┌──────────────────────────────────┐
  │ The network node 21 receives a key for │ ⌐ S801
  │ the PTP protocol from a domain control │
  │  device 11 in the domain to which the  │
  │    present network node belongs        │
  └──────────────┬───────────────────┘
                 │
                 ▼
  ┌──────────────────────────────────┐
  │ The network node 21 performs encrypted │ ⌐ S802
  │  communication following the PTP       │
  │  protocol with another network node in │
  │  the domain 10 with the key received at │
  │          step S801                     │
  └──────────────┬───────────────────┘
                 │
                 ▼
           ┌─────────────┐
           │     End     │
           └─────────────┘
```

## Fig.8

Fig.9

Fig.10

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090086973 A1

**Non-patent literature cited in the description**

- **JOHN MALONE-LEE.** Identity-Based Signcryption. *Cryptology ePrint Archive, Report 2002/098,* 2002, http://eprint.iacr.org